# EUROPEAN PATENT APPLICATION

(11) **EP 4 322 680 A1**
(43) Date of publication of application: **14.02.2024**
(21) Application number: 22190245.5
(22) Date of filing: 12.08.2022
(51) Int. Cl.: H04W 72/1268

(54) **COMMUNICATION DEVICE AND BASE STATION INVOLVED IN UPLINK CONFIGURATION**

(71) Applicant: Panasonic Intellectual Property Corporation of America, Torrance, CA 90504 (US)
(72) Inventor: KUANG, Quan, 63225 Langen (DE); SUZUKI, Hidetoshi, Osaka, 571-8501 (JP); NUNOME, Tomoya, Miyagi, 981-3206 (JP)
(74) Representative: Grünecker Patent- und Rechtsanwälte PartG mbB

(57) **Abstract**

Provided are a communication device, a base station, and methods for a communication device and a base station. The communication device comprises a transceiver, which receives a transmission configuration defining a first time resource for a semi-statically configured uplink transmission applicable to an associated resource type, and a resource type configuration defining a resource type of a second time resource, and circuitry, which, based on the transmission configuration and the resource type configuration, makes a determination on whether to initiate performing or skip the semi-statically configured uplink transmission on the first time resource. The circuitry determines to skip the uplink transmission if the first time resource overlaps with the second time resource and if the uplink transmission is not applicable to the resource type of the second time resource, and the transceiver, in operation, performs or skips the semi-statically configured uplink transmission in accordance with a result of the determination.

## Description

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE, LTE-A, and NR, further modifications and options may facilitate efficient operation of the communication system as well as particular devices pertaining to the system.

### SUMMARY

One non-limiting and exemplary embodiment facilitates efficient reporting of interference as well as interference cell management.

In an embodiment, the techniques disclosed herein feature a communication device comprising a transceiver, which, in operation, receives a transmission configuration defining a first time resource allocated for a semi-statically configured uplink transmission applicable to an associated resource type, and a resource type configuration defining a resource type of a second time resource, and circuitry, which, in operation, based on the transmission configuration and on the resource type configuration, makes a determination on whether to initiate performing or skip the semi-statically configured uplink transmission on the first time resource, wherein the circuitry determines to skip the semi-statically configured uplink transmission on the first time resource if the first time resource overlaps with the second time resource and if the semi-statically configured uplink transmission is not applicable to the resource type of the second time resource, and the transceiver, in operation, performs or skips the semi-statically configured uplink transmission in accordance with a result of the determination.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing which shows functional split between NG-RAN and 5GC,
- **Fig. 3**: is a sequence diagram for RRC connection setup/reconfiguration procedures,
- **Fig. 4**: is a schematic drawing showing usage scenarios of Enhanced mobile broadband (eMBB), Massive Machine Type Communications (mMTC) and Ultra Reliable and Low Latency Communications (URLLC),
- **Fig. 5**: is a block diagram showing an exemplary 5G system architecture for a non-roaming scenario,
- **Figs. 6A and 6B**: is a schematic drawing illustrating subband non-overlapping full duplex from a gNB perspective and a UE perspective,
- **Fig. 7**: is a schematic drawing illustrating potential overlapping of CG PUSCH with downlink transmissions in subband non-overlapping full duplex operation,
- **Fig. 8**: is a block diagram showing a base station and a communication device,
- **Fig. 9**: is a block diagram showing Configured uplink transmission determination circuitry
- **Fig. 10**: is a flow chart showing steps of a communication method for a communication device,
- **Fig. 11**: is a flow chart showing steps of a communication method for a base station,
- **Fig. 12**: is a schematic drawing illustrating association of CG PUSCH configuration with symbol types,
- **Fig. 13**: is a flow chart showing steps of a communication method for a communication device,
- **Fig. 14**: is a flow chart showing steps of a communication method for a base station, and
- **Fig. 15**: is a schematic drawing illustrating determination regarding CG PUSCH transmission in accordance with reception of a dynamic slot format indicator.

### DETAILED DESCRIPTION

### 5G NR system architecture and protocol stacks

3GPP has been working at the next release for the 5^{th} generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

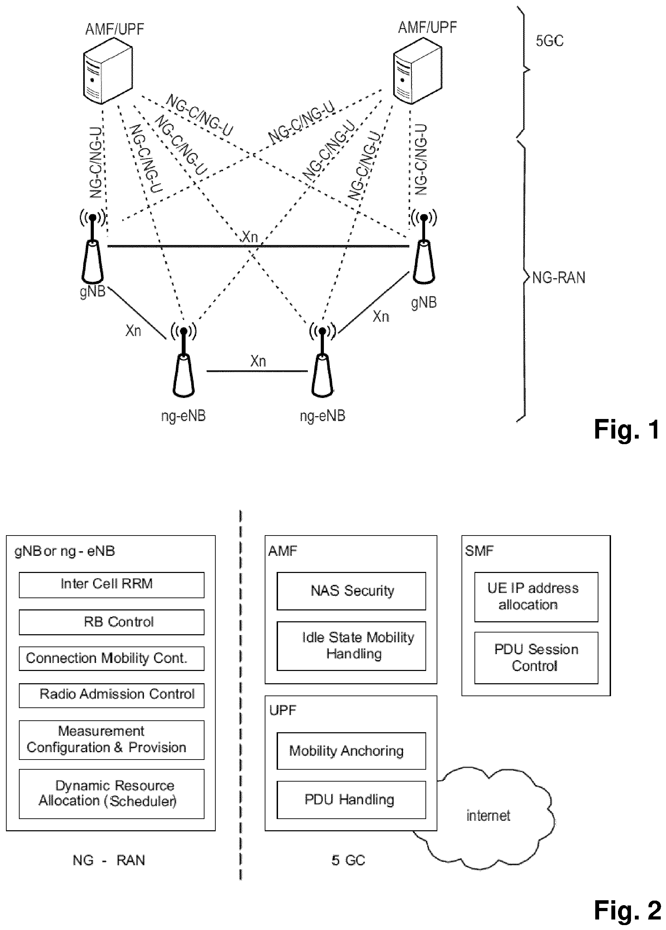

Among other things, the overall system architecture assumes an NG-RAN (Next Generation - Radio Access Network) that comprises gNBs (gNodeB), providing the NG-radio access user plane (SDAP/PDCP/RLC/MAC/PHY) and control plane (RRC, Radio Resource Control) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), and/or massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

In NR, a resource block (RB) is defined as 12 consecutive subcarriers in frequency domain. Resource blocks are numbered from zero upwards in frequency domain as Common resource blocks for a subcarrier spacing configuration. Physical resource blocks (PRBs) are defined within a bandwidth part (a subset of contiguous common resource blocks) and numbered per bandwidth part.

### 5G NR functional split between NG-RAN and 5GC

**Fig. 2** illustrates functional split between NG-RAN and 5GC. NG-RAN logical node is a gNB or ng-eNB (next generation eNB). The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS (Non-access stratum) messages;
- Radio access network sharing;
- Dual Connectivity;
- Tight interworking between NR and E-UTRA.

The Access and Mobility Management Function (AMF) hosts the following main functions:
- Non-Access Stratum, NAS, signaling termination;
- NAS signaling security;
- Access Stratum, AS, Security control;
- Inter Core Network, CN, node signaling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

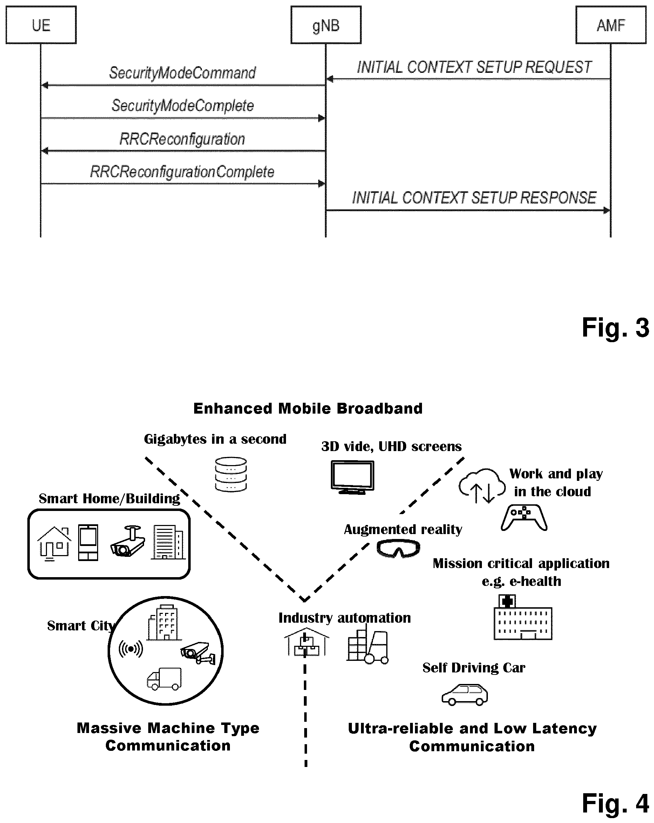

**Fig. 3** illustrates some interactions between a UE, gNB, and AMF (a 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. Fig. 2 of ITU-R M.2083).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI (Downlink Control Information) formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from the physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising e.g. fourteen symbols).

In slot-based scheduling or assignment, a slot corresponds to the timing granularity (TTI - transmission time interval) for scheduling assignment. In general, TTI determines the timing granularity for scheduling assignment. One TTI is the time interval in which given signals is mapped to the physical layer. For instance, conventionally, the TTI length can vary from 14-symbols (slot-based scheduling) to 2-symbols (non-slot based scheduling). Downlink (DL) and uplink (UL) transmissions are specified to be organized into frames (10 ms duration) consisting of 10 subframes (1 ms duration). In slot-based transmission, a subframe is further divided into slots, the number of slots being defined by the numerology / subcarrier spacing. The specified values range between 10 slots per frame (1 slot per subframe) for a subcarrier spacing of 15 kHz to 80 slots per frame (8 slots per subframe) for a subcarrier spacing of 120 kHz. The number of OFDM symbols per slot is 14 for normal cyclic prefix and 12 for extended cyclic prefix (see section 4.1 (general frame structure), 4.2 (Numerologies), 4.3.1 (frames and subframes) and 4.3.2 (slots) of the 3GPP TS 38.211 V15.3.0, Physical channels and modulation, 2018-09). However, assignment of time resources for transmission may also be non-slot based. In particular, the TTIs in non slot-based assignment may correspond to mini-slots rather than slots. I.e., one or more mini-slots may be assign to a requested transmission of data/control signaling. In non slot-based assignment, the minimum length of a TTI may for instance be 1 or 2 OFDM symbols.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

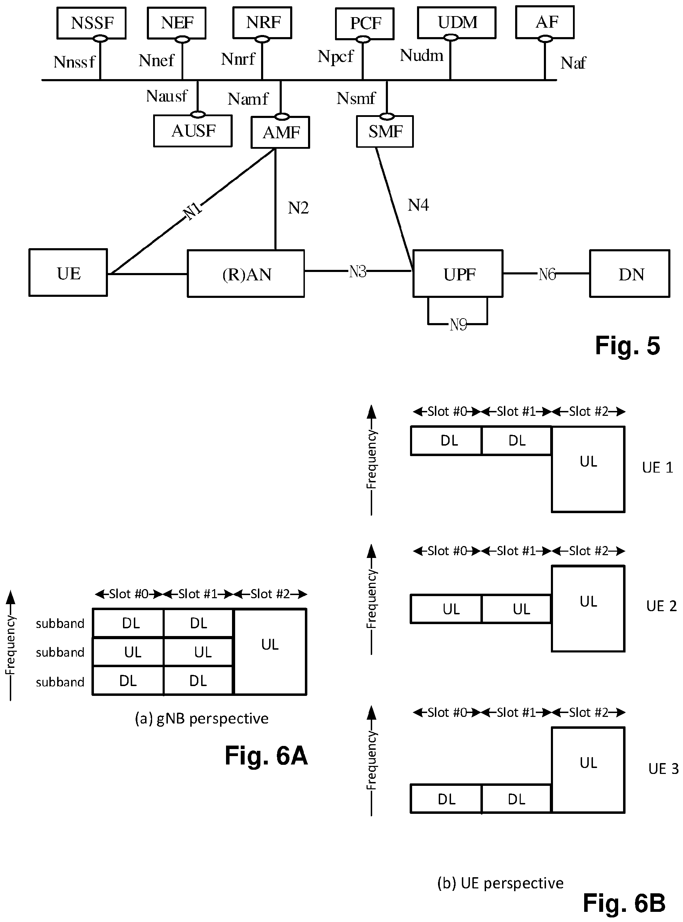

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to directly access the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF, UPF, etc.) of the 5GC to establish a PDU session including a radio bearer between a gNodeB and a UE in accordance with the QoS requirement and control circuitry, which, in operation, performs the services using the established PDU session.

### Subband non-overlapping full duplex

In time division duplex (TDD) operation, the time domain resource is split between downlink and uplink. Allocation of a limited time duration for the uplink in TDD may result in reduced coverage, increased latency, and reduced capacity. In view of this, full duplex such as subband-non-overlapping full duplex (SBFD) is studied in NR (see 3GPP TSG RAN#94-e, RP-213591, "New SI: Study on evolution of NR duplex operation").

It is being studied how to enable SBFD within a TDD band. SBFD provides for simultaneous existence of downlink and uplink within a TDD band, where subbands within the TDD band are used to split or to separate the different transmission directions. For instance, uplink and downlink transmissions are processed simultaneously by a base station. An example of SBFD operation is shown in **Fig. 6A** from the perspectives of (a) the base station (gNB) and in **Fig. 6B** from the perspective of (b) the user equipment (UE).

For the purpose of illustration, in Fig. 6 as well as in further figures of the present disclosure, an example is shown where in the time domain, the assignment of resources to uplink and downlink is made on the slot level. However, the present disclosure is also applicable to scenarios where the level of granularity in the time domain for assigning uplink and downlink (or flexible) resources is different from slot level. For instance, an assignment of the symbols within a slot as uplink, downlink, and flexible may be provided by a slot format.

### Configured Grant (CG) PUSCH

An uplink transmission on a PUSCH can be scheduled via dynamic grant, e.g. using a DCI (downlink control information) or without dynamic grant. A PUSCH without configured grant is called Configured Grant (CG) PUSCH. CG PUSCH is semi-statically configured, e.g. by RRC, and includes the following types.

For type-1 CG PUSCH, all transmission parameters including time and frequency resource allocation are RRC configured for a given BWP. For instance, time resource allocation may include periodicity in terms of slots and symbol number(s) within a slot. For type-2 CG PUSCH, transmission periodicity is provided by RRC configuration, and a DCI is used to activate and deactivate the transmission. Although time and frequency resource allocation is dynamically indicated by the activation DCI, the same resource allocation would be used for all PUSCH instances with the configured periodicity, e.g. until type-2 CG PUSCH is deactivated or released by another DCI.

In both type-1 and type-2 CG PUSCH, time frequency resource allocation has a semi-static nature, in contrast to the dynamic nature of PUSCH scheduled by a dynamic grant.

### Slot format

In NR operation including Releases 15-17 (Rel-15/16/17), the gNB informs the UE of the transmission direction via slot format. A slot format includes downlink (D, DL), uplink (U, UL), and flexible (F) symbols. A slot format, indicating each symbol in a slot to be U, D, or F, can be configured semi-statically by RRC signaling or dynamically by DCI. Semi-static configuration may include cell-level common signaling or UE dedicated RRC signaling. A slot format in cell level common signaling is provided by information element *tdd-UL-DL-ConfigurationCommon,* which may be broadcast e.g. by SIB1 (System Information Block 1). In UE dedicated signaling, a slot format may be indicated using information element *tdd-UL-DL-ConfigurationDedicated.* A dynamic configuration of the slot format is provided in the DCI using a slot format indicator (SFI), e.g. *SlotFormatIndicator,* transmitted by a field in DCI format 2_0. The SFI provides a pointer towards a specific slot format combination generated from standardized slot formats. Furthermore, the standardized slot format 255 is used to indicate that the uplink/downlink/flexible transmission pattern is not determined by the dynamically indicated slot format combination. For instance, if SFI indicates the standardized slot format 255, the UE may determine the slot format for the slot based on *tdd-UL-DL-ConfigurationCommon,* or *tdd-UL-DL-ConfigurationDedicated.*

When configuring the slot format by Release 15-17 specification of NR, the following rules should be observed:
- Semi-static cell common D and U symbols cannot be changed by either UE-dedicated RRC or dynamic configuration (SFI in DCI format 2_0).
- Only semi-static cell common F symbol can be overwritten to D or U by UE-dedicated RRC.
- If semi-static cell common F symbol is not overwritten to D or U by UE-dedicated RRC, it remains semi-static F, which can be further indicated by SFI in DCI format 2_0 to dynamic D, dynamic U, or dynamic F.

When the gNB operates with SBFD operation, the available UL frequency resources, as well as the interference situation, are different between a UL symbol or slot (e.g. a "normal" UL symbol or slot which is an uplink resource across the whole band) and an SBFD symbol or slot (where the subbands within the frequency band are used to separate the DL and UL transmission directions).

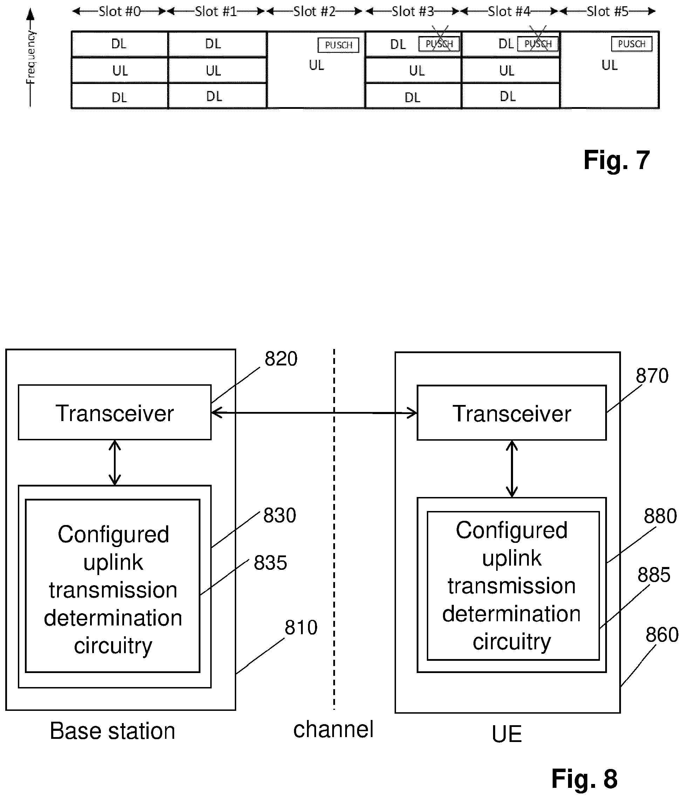

For CG PUSCH resource allocation, the allocated time resources may at one instance overlap with UL resources in time, but may at another instance be overlapping with SBFD resources in time. These two cases are shown in **Fig. 7****.** In the case of CG PUSCH allocation overlapping with SBFD slots or symbols, their resource allocation may deteriorate the performance of DL transmission allocated to one of the subbands on the same symbol or slot and have an interference impact e.g. when the frequency resources of the CG PUSCH and the DL transmission are overlapping (see slots #3 and #4 in the example in Fig. 7).

In the present disclosure, "SBFD symbol" refers to a symbol with subbands that the gNB would potentially use for SBFD operation, and a "normal UL symbol" or "UL symbol" is a symbol used for UL in the legacy NR (Rel-15/16/17) containing no subband splitting. Both SBFD and normal UL symbols are defined from gNB perspective, while UE might or might not know the intended usage of gNB. Corresponding definitions apply to SBFD and ("normal") UL slots as well, or more generally, time resources.

In view of the above-mentioned issues of interference and performance deterioration or degradation, if a gNB operates an SBFD symbol in a semi-static manner, it is in principle possible to configure the CG PUSCH in a manner to align the time resources (e.g. periodicity and symbol offset) with those of either UL symbols or SBFD symbols. However, such alignment is an additional constraint on CG PUSCH configuration that needs to be taken care of by the gNB and which adds to the complexity of resource allocation. Furthermore, if the SBFD time pattern changes, reconfiguration of CG PUSCH is needed for new alignment, which increases the signaling overhead.

In view of the above, it is an approach of the present disclosure to introduce an association between a CG PUSCH configuration and applicable symbol type(s), such that the UE will skip a CG PUSCH instance (no transmission) if it is not overlapping or not matching with the applicable symbol type(s). Different examples of "symbol type" will be provided with respect to several embodiments.

As shown in **Fig. 8****,** provided is a communication device 860 comprising a transceiver 870 and circuitry 880.

The transceiver receives a transmission configuration defining a first time resource allocated for semi-statically configured uplink transmission. In the transmission configuration, the uplink transmission is configured to be applicable to an associated resource type. The transceiver 870 further receives a resource type configuration defining a resource type of a second time resource.

Based on the received transmission configuration and the resource type configuration, the circuitry 880, in operation, makes a determination on whether to initiate performing or skip the semi-statically configured uplink transmission on the first time resource. In the determination, the circuitry determines to skip the semi-statically configured uplink transmission on the first time resource if the first time resource overlaps with the second time resource and if the semi-statically configured uplink transmission is not applicable to the resource type of the second time resource.

In accordance with a result of the determination, the transceiver 870, in operation, performs or skips the semi-statically configured uplink transmission on the first time resource in accordance with a result of the determination.

For instance, the communication device 860 is a communication apparatus, user device or terminal device/apparatus such as a user equipment (UE).

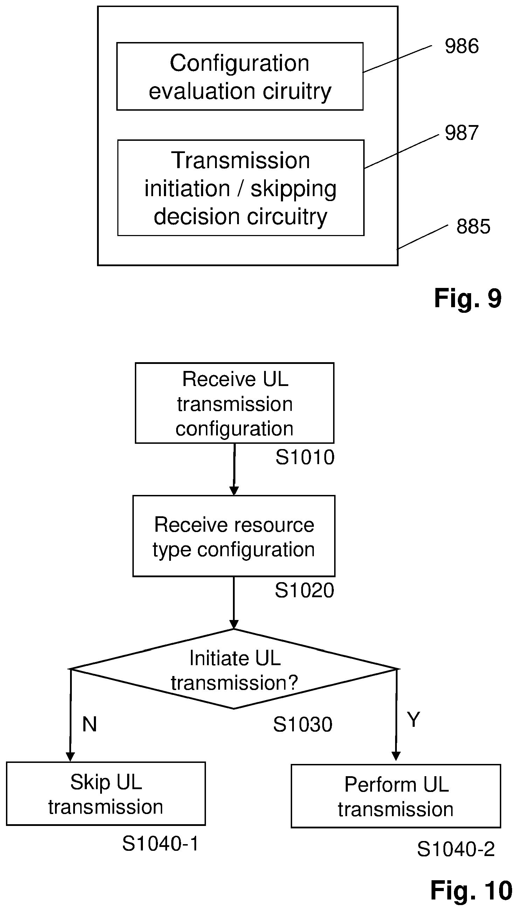

The UE circuitry 880 may include configured uplink transmission determination circuitry 885. As shown in **Fig. 9****,** exemplary configured uplink transmission determination circuitry 885 includes configuration evaluation circuitry 986 which, in operation, evaluates the received transmission and resource type configurations, and transmission initiation or skipping decision circuitry 987 which determines, in accordance with the evaluation, whether to control the UE transceiver 870 whether to initiate performing or to skip the semi-statically configured uplink transmission.

Further provided, and also shown in **Fig. 8****,** is a base station 810. The base station comprises a transceiver 820 and circuitry 830.

The transceiver 820, in operation, generates a transmission configuration defining a first time resource allocated for a semi-statically configured uplink transmission applicable to an associated resource type. The circuitry 830 further generates a resource type configuration defining a resource type of a second time resource.

Based on the transmission configuration and on the resource type configuration, the circuitry 830, in operation, makes a determination on whether to initiate or skip receiving the semi-statically configured uplink transmission on the first time resource. Therein, the reception of the semi-statically configured uplink transmission on the first time resource is determined to be skipped if the first time resource overlaps with the second time resource and if the semi-statically configured uplink transmission is not applicable to the resource type of the second time resource

The transceiver 820, in operation, performs reception or skips reception of the semi-statically configured uplink transmission in accordance with a result of the determination.

The base station 810 may be a scheduling entity or a scheduling node such as a gNB.

For instance, base station circuitry 830 comprises configured uplink transmission determination circuitry 835.

To distinguish the circuitries and transceivers of the communication device (UE) 860 and the base station 810, we shall use the terms "UE circuitry/transceiver, and, respectively gNB circuitry/transceiver".

As shown in Fig. 8, the base station 810 and the communication device 860, via transceivers 820 and 870, perform communication (transmission and reception) via a communication channel such as a wireless channel. For instance, in the transmission and reception operations mentioned above to be performed by the base station 810 and the communication device 870, the base station 810 transmits to the communication device 860 and receives from the communication device 860, and vice versa.

As described herein, gNB and UE transceivers 820 and 870 perform transmission and reception of data such as aforementioned configurations or uplink transmissions or other data to be mentioned below. For instance, the transceivers transmit or receive signals carrying the respective data. The circuitry 830 and 880 controls the respective transceiver 820 or 870 to perform the corresponding transmission or reception of the data.

As shown in **Fig. 10****,** in correspondence with communication device is a communication method to be performed by a communication device 860, which comprises method steps to be performed by a communication device such as a UE. In step S1010, the UE receives a transmission configuration defining a first time resource allocated for a semi-statically configured uplink transmission applicable to an associated resource type. In Step S1020, the UE receives a resource type configuration defining a resource type of a second time resource. For instance, the transmission and resource type configurations are received from a base station. Based on the transmission configuration and on the resource type configuration, in step S1030, the UE makes a determination on whether to initiate performing or skip the semi-statically configured uplink transmission on the first time resource. In determination step S1030, the semi-statically configured uplink transmission is determined to be skipped on the first time resource if the first time resource overlaps with the second time resource and if the semi-statically configured uplink transmission is not applicable to the resource type of the second time resource. The UE performs (S1040-2) or skips (S1040-1) the semi-statically configured uplink transmission on the first time resource in accordance with a result of the determination.

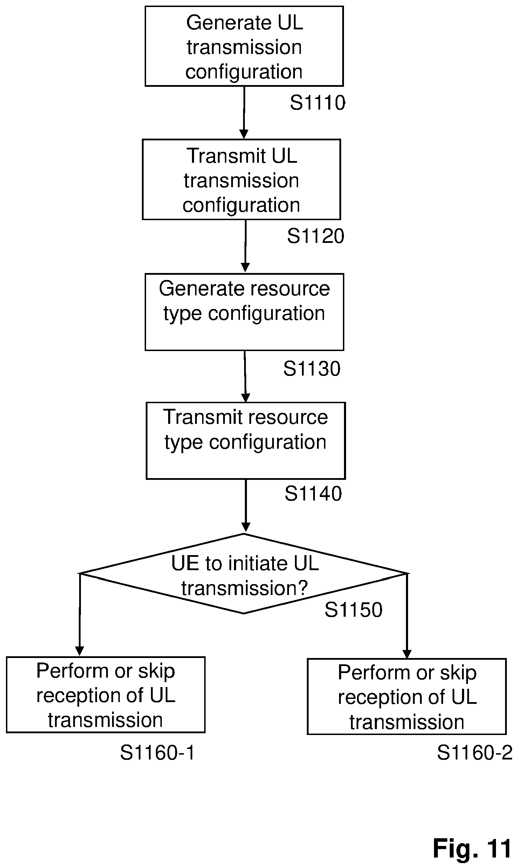

Further, as shown in **Fig. 11****,** provided is a communication method including steps to be performed by a base station 810.

In step S1110, the base station generates a transmission configuration defining a first time resource allocated for a semi-statically configured uplink transmission applicable to an associated resource type, and transmits the transmission configuration in step S1120.

In step S1130, the base station generates a resource type configuration defining a resource type of a second time resource, and transmits the resource type configuration in step S1140.

Furthermore, in the method, the base station performs step S1150 of making a determination on whether to initiate or skip receiving the semi-statically configured uplink transmission on the first time resource. In this step, the reception of the semi-statically configured uplink transmission on the first time resource is determined to be skipped if the first time resource overlaps with the second time resource and if the semi-statically configured uplink transmission is not applicable to the resource type of the second time resource.

The method for the base station further includes step S1160-2 of performing or step S1160-1 of skipping reception of the semi-statically configured uplink transmission in accordance with a result of the determination.

It is noted that the present disclosure is not limited to the order of method steps as described above and shown in Figures 10 and 11. For instance, in the UE method, the order of reception of the transmission configuration and the resource type configuration, steps S1010 and S1020, may be switched. Correspondingly, in the base station method, steps S1130 and S1140 of generating and transmitting the resource type configuration may be performed before steps S1110 and S1120 of generating and transmitting the semi-static uplink transmission configuration.

As mentioned, base station 810 and communication device 860 communicate with each other via a communication channel. Accordingly, each transmission operation disclosed on the side of one entity (communication device or base station) implies a corresponding reception operation on the other side. Furthermore, each operation detail described with respect to the devices implies a corresponding method step in a method corresponding to the device.

As described above, a transmission configuration and a resource type configuration are received by the communication device 860 from the base station 810.

The transmission configuration is received via semi-static signaling, e.g. RRC signaling, and configures a semi-statically configured uplink transmission, e.g. a transmission that is not configured by a dynamic grant. The semi-statically configured uplink transmission may be, but is not limited to, the above-mentioned CG PUSCH, e.g. type-1 and type-2 CG PUSCH mentioned above. A semi-static configuration configures frequency resources and time resources for a semi-statically configured uplink transmission (For type-2 CG PUSCH, as mentioned before, although the frequency resources are allocated by a DCI, the same frequency resources would be used for all CG PUSCH instances until CG PUSCH is deactivated by another DCI.). Frequency resources may be placed within a band, e.g. bandwidth part, or within a subband of a band. Time resources may include slot periodicity, slot offset, and symbol number. In the present disclosure, time resources configured or indicated by a semi-static transmission configuration are denoted as a "first" time resource or first time resources.

The resource type configuration may include a semi-statically (e.g. RRC) configured configuration as well. However, the resource type configuration may also be configured dynamically via DCI. The resource type configuration configures a time pattern where a resource type is indicated for each of a plurality of available time resources (such as slots, symbols, etc.). The time resources are associated with respective resource types to divide the available resources into time resources that allow for SBFD operation and time resources that allow for uplink operation but may not allow for SBFD operation.

In the present disclosure, time resources configured by a resource type configuration are denoted as "second" time resources. The resource type configuration may be configured independently of the semi-static uplink transmission configuration, e.g. with different periodicities. As another example, when configuring the resource types of the second time resources, the base station need not be aware or care which resources are allocated for semi-statically configured uplink transmission. Moreover, it is possible to semi-statically configure an uplink transmission such as CG PUSCH without knowledge or neglecting the knowledge of the time pattern of resource types or the resource type configuration. Accordingly, the second time resources may include time resources overlapping with the first time resources allocated for semi-static uplink transmission, and they may include time resources that are non-overlapping with first time resources.

Nevertheless, it is also possible that the resource type configuration is generated, and a time pattern indicated therein is determined based on the allocation of resources in the semi-static transmission configuration, or the transmission configuration may be generated based on the resource type configuration and the time pattern indicated therein.

As described, both the base station 810 and the communication device 860 make a determination on whether the communication device 860 is to initiate performing or to skip the semi-statically configured uplink transmission. The semi-statically configured uplink transmission is determined to be skipped if it is determined that the first time resource overlaps with the second time resource and if the semi-statically configured uplink transmission is determined not to be applicable to the resource type of the second time resource.

If the first time resource is overlapping with the second time resource and the semi-statically configured time resource is determined to be applicable to the resource type of the second time resource, the circuitry 880 determines to initiate performing the semi-statically configured uplink transmission on the first time resource and the communication device 860 initiates performing of the semi-statically configured uplink transmission. Here, "initiating" the transmission (and reception on the base station side) may include further determinations or tests, such as checking whether there is a dynamically granted transmission, e.g. a downlink transmission, allocated to the second time resource. Accordingly, "performing transmission of the semi-statically configured uplink resource in accordance with a result of the determination" may include includes further conditions to which the performing of the uplink transmission is subject.

In the following, examples will be described of how the UE is enabled to determine a resource type associated with an uplink transmission and whether the semi-statically configured transmission is applicable to a given resource type.

One possibility is that the UE is configured with a first transmission configuration and a second transmission configuration. In such case, UE transceiver 870 may receive a fist transmission configuration defining the first time resource allocated for a first semi-statically configured uplink transmission applicable to a first resource type as the associated resource type, and a second transmission configuration defining a third time resource allocated for a second semi-statically configured uplink transmission applicable to a second resource type as an associated resource type, wherein the first semi-statically configured uplink transmission is not applicable to the second resource type.

Similar to the first semi-statically configured uplink transmission allocated to the first time resource, the circuitry 880 and 830 makes a determination on whether to initiate performing or skip the second semi-statically configured uplink transmission on the third time resource, and the transceiver 870 performs or skips the second semi-statically configured transmission on the third time resource in accordance with a result of the determination.

As described above, a first uplink transmission and a second uplink transmission may be semi-statically configured, wherein the first uplink transmission is applicable to a first resource type, the second uplink transmission is applicable to a second resource type, and the first semi-statically configured uplink transmission is not applicable to the second resource type. In this case, the second semi-statically configured uplink transmission may or may not be applicable to the first resource type.

It is noted that the expressions "first" and "second" resource type are used interchangeably to refer to any of one resource type allowing for SBFD and another resource type not allowing for SBFD. Accordingly, the "first" resource type may refer to the resource type allowing SBFD or the resource type not allowing SBFD. Similarly, the expression "second resource type" may refer to both types and is used to describe a scenario where a first resource type and a second resource type are to be distinguished.

The resource type to which the semi-statically configured uplink transmission is applicable may be a one of (i) a resource type allowing subband duplex (e.g. SBFD) and (ii) a resource type prohibiting subband duplex.

For instance, the gNB circuitry 830, in operation, determines that the UE 860 is to skip the semi-statically configured uplink transmission on the first time resource when allocating or reserving the first time resource for subband duplex operation. In such a case, for example the semi-statically configured uplink transmission may be configured as being applicable to the resource type prohibiting subband duplex, but not to the resource type allowing for subband duplex.

For instance, the first resource type is a resource type allowing for subband duplex, and the second resource type is a resource type prohibiting subband duplex. Alternatively, the first resource type may be a resource type prohibiting subband duplex, and the second resource type may be a resource type allowing for subband duplex.

To enable the UE to determine whether a semi-statically configured uplink transmission is applicable to a resource type or to determine the corresponding resource type, applicability information may be signaled from the base station to the UE.

The UE transceiver 870 may receive applicability information indicating whether the semi-statically configured uplink transmission is applicable to the resource type of the second time resource.

One possibility is providing the applicability information in the form of a resource type indicator. For instance, the transmission configuration may include a resource type indicator (or, more briefly, "type indicator") indicating the associated resource type. The resource type indicator may be a label or tag that is appended to or included in the semi-statically configured uplink configuration. The resource type indicator may indicate the first resource type or the second resource type.

As an alternative to a resource type indicator in the uplink transmission configuration, the UE may know the applicable resource type for the semi-statically configured uplink transmission from a configuration type of the uplink configuration and a certain rule specified in the standards. For example, the standards could specify that a certain type of uplink configuration is applicable to a certain resource type.

### Full duplex resource and uplink resource

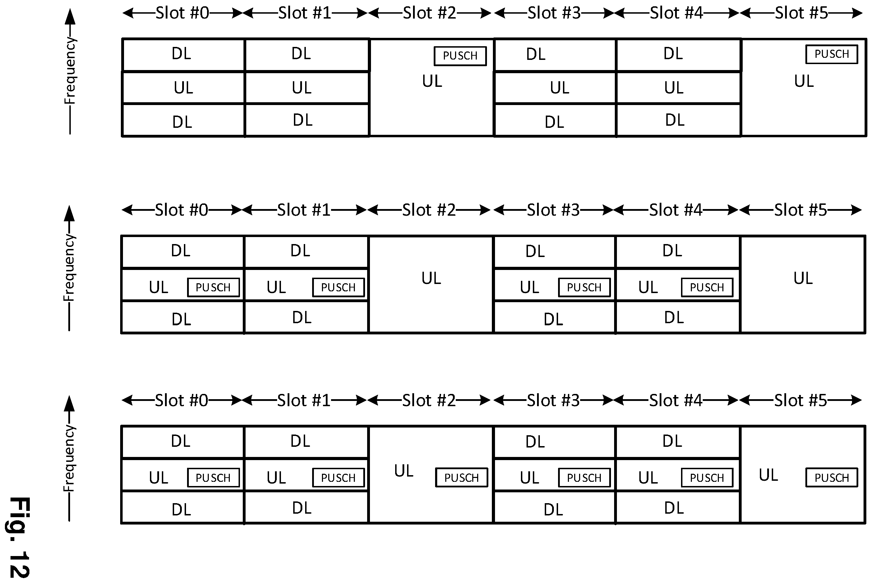

In the following, an example will be described with reference to **Fig. 12** where a time pattern of resource types is configured and a resource type indicator is provided in a semi static uplink transmission configuration. In this example, the applicable resource type of the time resources is a resource type out of (i) full duplex (e.g. SBFD) resource and (ii) uplink resource prohibiting full duplex (or "non-full duplex uplink resource")

As shown, a time pattern of SBFD time resources is configured to the UE as an example of a resource type configuration. The configuration may be done semi-statically via RRC or dynamically via DCI. The time pattern of the resource type configuration determines which time resources out of a plurality of time resources (e.g. consecutive slots or symbols within a slot) are SBFD time resources. Although Fig. 12 shows slots as time resources, the configuration of the time pattern may be made, for example, on slot level, symbol level, a combination of both, or other time units such as minislots etc. For instance, in Fig. 12, the time pattern configures slots #1, #1, #3, and #4 are configured SBFD time resources. The other uplink resources outside this SBFD time pattern (slots #2 and #5 in this example) are regarded as "normal" uplink time resources not allowing full duplex. Although SBFD time resources contain subbands available for different transmission directions (UL, DL), the gNB need not always operate in full duplex in SBFD time resources. For example, gNB may schedule UL transmission over the UL subband and leave DL subband unused in the SBFD time resources.

In the CG PUSCH configuration as an example of a semi-statically configured transmission configuration, there is a type indicator (or label or tag) which indicates whether this CG PUSCH is applicable to SBFD symbols /time resources (top part of Fig. 12) or "normal" non-full duplex symbols / time resources (middle part Fig. 12). If the applicable symbol type or resource type is not indicated in the CG PUSCH configuration, the configuration may apply to both types (bottom part of Fig. 12).

One example is to include the following parameter in the CG PUSCH configuration as the type indicator:
Cg-PUSCH-resourceType ENUMERATED {SBFD, non-SBFD}

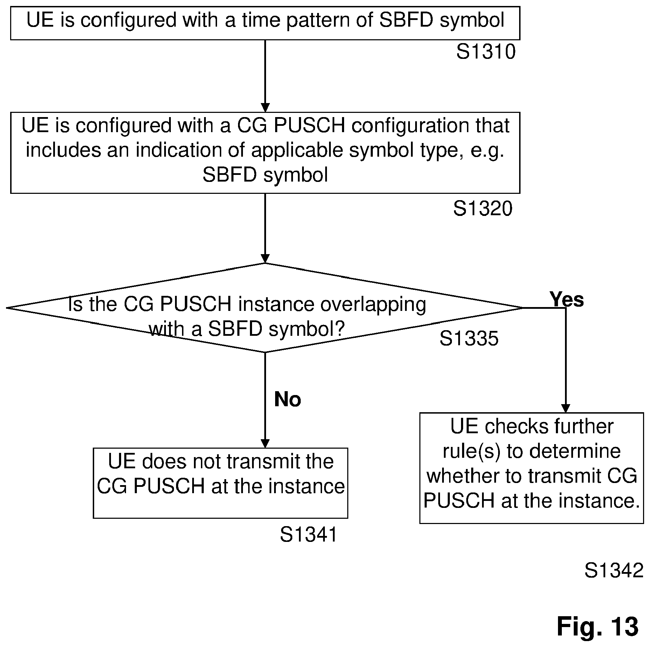

Exemplary method steps for a UE method where the resource type configuration includes an SBFD time pattern are shown in **Fig. 13****.** In step S1310, the UE is configured with a time pattern of SBFD symbols as a resource type configuration. In step S1320, the UE is configured with a CG PUSCH configuration that includes an indication of applicable symbol type, e.g. SBFD symbol. Step S1310 corresponds to step S1020 of receiving a resource type configuration, and step SS1320 corresponds to step S1010 of receiving an uplink transmission configuration, which may be switched in their time order as mentioned above. In step S1335 (as a part of the determination from step S1030), the UE checks if the CG PUSCH instance is overlapping with an SBFD symbol (or symbols). If no, the UE does not transmit the CG PUSCH at the time instance that is overlapping with the SBFD symbol(s) (step 1341). If yes, the UE initiates performing the uplink transmission, which may include further tests such as checking further rule(s) to determine whether to transmit CG PUSCH at the instance (step 1342). For instance, if the UE has received another DCI to schedule DL reception at the symbol, UE will not transmit the CG PUSCH transmission.

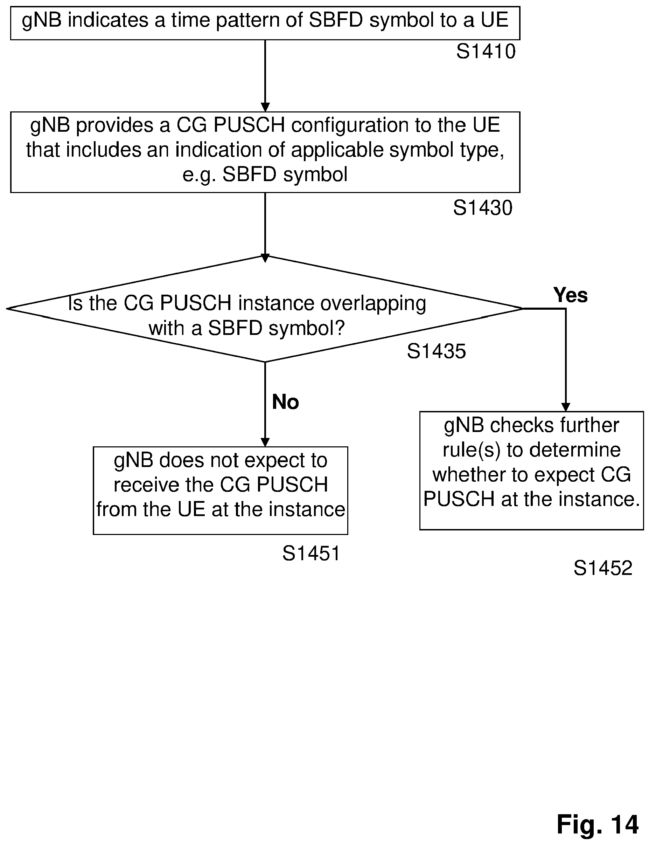

Corresponding method steps for the gNB are shown in Fig. 14. In step S1410, the gNB indicates, in a resource type configuration, a time pattern of SBFD symbols to a UE. In step S1430, the gNB provides, as a semi-static transmission configuration, a CG PUSCH configuration to the UE that includes an indication of applicable symbol type (e.g. SBFD symbol). In step S1435, the gNB determines if the CG PUSCH instance is overlapping with a SBFD symbol. If no, the gNB does not expect to receive the CG PUSCH from the UE at the instance (step S1451). If yes, the gNB may prepares for receiving the CG PUSCH transmission, wherein it may check further rule(s) to determine whether to expect CG PUSCH at the instance (step 1452). For instance, if the gNB has sent another DCI to schedule DL reception at the symbol, gNB will not expect to receive CG PUSCH from the UE.

Figures 13 and 14 show an example where the applicable resource type for the CG PUSCH transmission is the SBFD (full duplex). However, the method steps shown in Figures 13 and 14 can also be performed with respect to "uplink" (not allowing SBFD) as the applicable resource (e.g. symbol) type. In this case, "SBFD symbol" in steps S1320 and S1335 of Fig. 13 as well as in steps S1420 and S1435 of Fig. 14 may be replaced by "uplink symbol" in steps S1320 and S1335, respectively.

In the example described above, a type indicator indicates whether a semi-statically configured transmission (i) full duplex (ii) uplink prohibiting full duplex time resources, and a resource type configuration includes a time pattern of full duplex time resources. However, as will be described further in the following examples, other information may be used to indicate the applicability of a time resource to a certain resource type for uplink transmission.

### Conflicting resource and non-conflicting resource

In the following, an approach of the present disclosure will be described where no explicit definition of "SBFD symbol" or "full duplex time resource" and "uplink symbol" needs to be known to the UE. Instead, the UE is configured with a first and a second semi-static slot format. For instance, in NR systems, the second semi-static slot format may be provided as an additional semi-static slot (e.g. "Rel-18 slot format") format to the "legacy" cell-common slot format used in Rel-15/16/17.

In some embodiments of the present disclosure, the resource type configuration includes a first slot format and a second slot format. Each of the first slot format and the second slot format specifies the aforementioned second time resource (or a plurality of resources such as symbols within a slot) as an uplink resource, a downlink resource, or a flexible resource (U, D, or F). The resource type to which the semi-statically configured uplink transmission on the aforementioned first time resource is applicable is one of:
i) a conflicting resource type where the first slot format indicates the second time resource as a downlink resource and the second slot format indicates the second time resource as an uplink resource or a flexible resource (e.g. conflicting symbol direction between first "legacy" semi-static and new Rel-18 semi-static slot format, e.g. D->U and D->F), and
ii) a non-conflicting resource type where the first slot format indicates the second time resource as a flexible resource or where respective indications of the second time resource in the first slot format and in the second slot format are the same (e.g. non-conflicting symbol direction between the above first and second semi-static slot formats, e.g. U->U, F->U, and F->F).

As a result, the UE may receive a combination of two semi-static slot formats as shown in the following **Table 1.**

**Table 1**

| **Legacy cell-common semi-static slot format** | **New semi-static slot format** | **Conflicting direction?** |
|---|---|---|
| D | D | Non-conflicting |
| D | U | Conflicting |
| D | F | Conflicting |
| U | U | Non-conflicting |
| F | D | Non-conflicting |
| F | U | Non-conflicting |
| F | F | Non-conflicting |

Similar to the above-described approach with full and non-full duplex uplink as symbol types, a type indicator (e.g. a label or tag) or resource type indicator may be provided in the semi-static transmission (e.g. CG PUSCH configuration) to indicate the applicable symbol type or resource type, e.g. whether the CG PUSCH or other semi-statically configured transmission is applicable to conflicting symbol or non-conflicting symbol. If no type indicator is provided in the transmission configuration, the UE (e.g. using UE circuitry 880) may determine that the semi-statically configured uplink transmission is applicable to both (conflicting and non-conflicting) types.

As an alternative to the type indicator, or in addition to the type indicator, a first transmission configuration having a first configuration type and a second transmission configuration having a second configuration type may be configurable. For instance, as an example of "first" uplink transmission configuration type, a "Rel-18 CG PUSCH configuration type" may be introduced in addition to any legacy (Rel-15/16/17) CG configuration type as an example of "second" uplink transmission configuration type. In the determination by the communication device and the base station and the whether a resource type is applicable to the configured uplink transmission, the following rule may be applied: The legacy configuration type is applicable to non-conflicting time resource(s) (e.g. symbols), whereas the Rel-18 transmission type is applicable to conflicting time resource(s). An explicit type indicator may, but need not be provided in the configuration, since other indications (e.g. format of the configuration or the configuration signaling) may be used by the UE for determining the configuration type.

In the present approach where the resource type is determined to be conflicting or non-conflicting, a conflicting symbol with conflicting direction configurations in the first and second slot configurations may correspond to SBFD operating symbol at the gNB side as a resource type allowing subband duplex operation. E.g., the gNB may allocate conflicting symbols for full duplex operation. However, the UE need not be aware whether SBFD is actually performed or not.

### Semi-static and dynamic transmission configuration

In the following, an approach will be described where, as in the above-described approach using conflicting and non-conflicting time resources, a configuration type (e.g. "Rel-18 CG PUSCH configuration type") is introduced. The applicable resource type is distinguished from among dynamic F symbol indicated by a DCI and dynamic U symbol indicated by a DCI. For instance, the DCI is a group common DCI such as DCI 2_0, or a dedicated DCI without actual PDSCH/PUSCH assignment.

In some embodiments, the resource type configuration includes a semi-statically configured slot format, and the UE (e.g. using UE the transceiver) receives a dynamically configured slot format in addition to the semi-statically configured slot format in the transmission configuration. The dynamically configured slot format may be transmitted in a DCI (e.g. DCI 2_0) by the base station.

Each of the semi-statically configured slot format and the dynamically configured slot format indicates the resource type of the second time resource as uplink, downlink, or flexible.

The semi-statically configured uplink transmission is not applicable to the resource type of the second time resource if the semi-statically configured slot format indicates the second time resource as a flexible resource and the dynamically configured slot format indicates the second time resource as an uplink or downlink resource.

The semi-statically configured uplink transmission is applicable to the resource type of the second time resource if both the semi-statically configured slot format and the dynamically configured slot format indicate the second time resource as a flexible resource.

In the aforementioned approaches, a type indicator in the semi-static transmission configuration is provided as applicability information. In the present approach, the dynamically configured slot format is provided as a kind of applicability information which indicates whether the semi-statically configured transmission is applicable to the resource type of the semi-statically configured slot format.

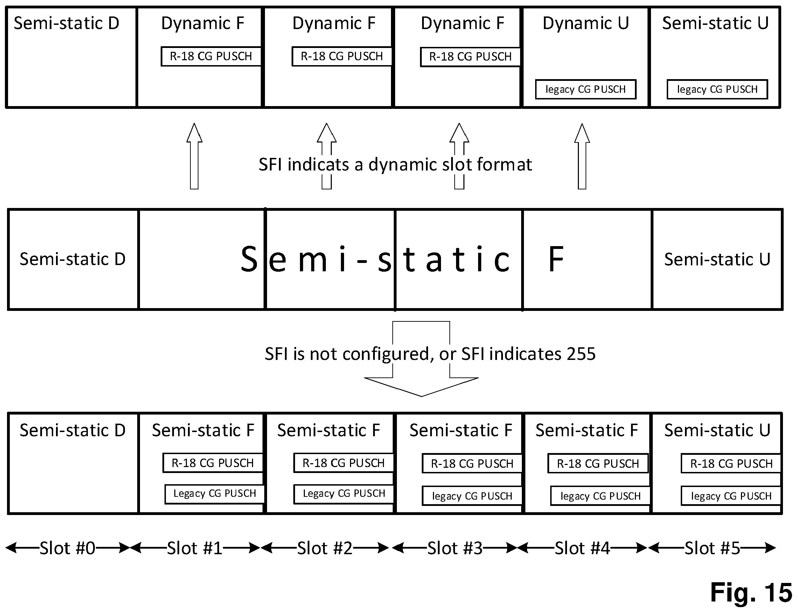

For instance, with an uplink transmission configuration having a configuration type such as the above-mentioned Rel-18, the following rule may apply: If UE receives a dynamic slot format indicator (SFI) via a DCI (e.g.DCI 2_0), and if the dynamic SFI indicates a dynamic slot format (having a value other than 255), the Rel-18 CG PUSCH configuration is applicable to dynamically configured F symbols only, as is illustrated in the top part of **Fig. 15** for the symbols in slots #1, #2, and #3.

If the dynamic SFI indicates 255 (meaning to ignore the dynamic SFI) or the UE is otherwise (e.g. by semi-static configuration) configured not to monitor dynamic SFI, the (e.g. Rel-18 CG PUSCH) uplink transmission configuration is applicable to both semi-statically configured U symbols and to semi-statically configured F symbols, as is illustrated by the bottom part of Fig. 15.

For instance, the semi-statically configured uplink transmission is applicable to the second time resource if both the following conditions (the first condition and at least of the cases separated by "or" of the second condition) apply: if the resource type configuration includes a semi-statically configured slot format defining the resource type of the second time resource as flexible, and if the transceiver, in operation, receives a configuration to ignore a dynamically indicated slot format for the second time resource (e.g. value 255 in the SFI) or a parameter indicating configuration of a dynamically indicated slot format for the second time resource is not configured to the UE. In the latter case, the examples of such indication could be sfi-RNTI (Radio Network Temporary Identifier) value is not provided to communication apparatus 860, or control resource set for DCI format 2_0 is not provided to UE, or the RRC IE

### SlotFormatIndicator is not provided to UE, and the UE is configured not to monitor dynamic SFI.

In the above description, "Rel-18 CG PUSCH configuration type" has been mentioned as an example of a first uplink transmission configuration type for a first uplink transmission configuration, which may be configurable in addition to a second uplink transmission type (e.g. "legacy" / Rel 15-17 CG PUSCH configuration) for a second uplink transmission.

For instance, a first transmission configuration (of the first configuration type) defines the first time resource allocated for a first semi-statically configured uplink transmission, and a second transmission configuration (of the second configuration type) defines a third time resource allocated for a second semi-statically configured uplink transmission applicable to a second resource type as the associated resource type. The second semi-statically configured uplink transmission is applicable to the resource type of the second time resource if the third time resource overlaps with the second time resource, the semi-statically configured slot format indicates the second time resource as a flexible resource, and the dynamically configured slot format indicates the second time resource as an uplink resource.

For instance, for the legacy CG PUSCH configuration, the following rule is applies: The UE is allowed to transmit the CG PUSCH:
- on a semi-statically configured U symbol (as the "third" time resource), as shown in the top part of Fig. 15 for slots #5 or
- on a semi-statically configured F-symbol if the UE is not configured to monitor SFI, as shown in the bottom part of Fig. 15.

Further, according to the rule, for a semi-statically configured F symbol, if the UE is configured to monitor SFI, the following applies: (i) If SFI indicates a value other than 255, the UE is allowed to transmit the CG PUSCH on a dynamic U symbol, (as shown for the symbols of slot #4 in the top part of Fig. 15), but is to cancel/skip the transmission on a dynamic F symbol. (ii) If the SFI indicates 255, the behavior is the same as if the UE is not configured to monitor SFI. (iii) If the SFI is missed by the UE (e.g. reception of the SFI has failed), the UE determines to transmit or not transmit, depending on the parameter *"enableconfiguredUL"* provided by RRC siganling. In more detail, if *enableconfiguredUL* is configured as "enabled", the UE is allowed to transmit uplink signals/channels (e.g. CG PUSCH) in the set of symbols of the slot when the UE does not detect a DCI format 2_0 providing a dynamic slot format for the set of symbols.

As described above, the semi-statically configured slot format may be of the above-mentioned "Rel-18 CG configuration type", and the dynamically configured slot format may be received in the DCI, as described.

Moreover, if another semi-static transmission configuration (e.g. legacy / Rel 15/16/17) type is available, the above-mentioned transmission configuration may be an example of a "first" transmission configuration, and the legacy configuration may be an example of a second uplink transmission configuration, or vice versa.

In the present approach, the dynamic F symbol may correspond to the SBFD operating symbol at the gNB side and thus correspond to a resource type allowing subband duplex. However, the UE need not be aware whether SBFD is actually performed on the symbol or not.

### Zero and non-zero N_{TA} offset

According to the present approach, the resource type to which the semi-statically configured uplink transmission is applicable is one of a resource type having a zero timing advance offset (e.g. a symbols with zero value of *N_{TA,offset}*) and a resource type having a non-zero timing advance offset (e.g. a symbols with non-zero value of *N_{TA,offset}*)*.*

For instance, a symbol or a plurality of symbols are configured with value zero of *N_{TA,offset}.* This configuration of zero *N*_{*TA*,*offset*} value can be done semi-statically (e.g. via RRC) or dynamically (via DCI).

The timing advance offset *N_{TA,offset}* is used for adjusting the timing difference between uplink and downlink transmissions. The uplink transmission takes place at *(N_{TA}* + *N_{TA,offset}*) × *T_{c}* before the reception of the corresponding downlink. *N_{TA}* is used to ensure that uplink transmissions from UEs are synchronized when gNB receives. *N_{TA,offset}* is used to reserve UL-to-DL switching time. *T_{c}* is a basic time unit for NR (e.g. *Tc* = 1/(480 000 × 4096) seconds).

In a similar manner as described for the aforementioned resource types, a resource type indicator (e.g. a label or tag) may be provided in the semi-static transmission configuration (e.g. CG PUSCH configuration) to indicate whether the configured uplink transmission is applicable to a time resource (e.g. symbol) with zero timing advance offset *N_{TA,offset}* or a time resource (e.g. symbol) with non-zero *N_{TA,offset}* value.

Furthermore, a symbol with a zero value of *N_{TA,offset}* may correspond to an SBD operating symbol at the gNB side as a symbol type allowing subband duplex, while the UE need not be aware whether SBFD is actually performed or not on the respective symbol.

The present disclosure and the various approaches and embodiments described herein provide techniques with which a semi-statically configured uplink transmission, (e.g. a CG PUSCH instance, can be transmitted or dropped (e.g. skipped) in a controlled way. Moreover, this control of performing or skipping semi-statically configured transmissions is facilitated without imposing restrictions on aligning the periodicity of CG PUSCH and SBFD time domain pattern at gNB side. For instance, by indicating a time resource type of a time resource as allowing for subband duplex, an interfering CG type uplink transmission can be prevented if the (semi-static) CG transmission configuration is not applicable to the resource type allowing for uplink transmission.

It is noted that CG PUSCH is mentioned in the present disclosure and description of its approaches as an example. The techniques described are applicable to other (semi-statically) configured transmissions such as configured transmission of UL signals and channels, such as SRS (sounding reference signals), PUSCH repetition, or PUCCH repetition.

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

The present disclosure may be applied to any of a licensed band and an unlicensed band.

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

The present disclosure can be realized by software, hardware, or software in cooperation with hardware. Each functional block used in the description of each embodiment described above can be partly or entirely realized by an LSI (large scale integration) such as an integrated circuit (IC), and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Summarizing, according to a first aspect, provided is a communication device comprising a transceiver, which, in operation, receives a transmission configuration defining a first time resource allocated for a semi-statically configured uplink transmission applicable to an associated resource type, and a resource type configuration defining a resource type of a second time resource, and circuitry, which, in operation, based on the transmission configuration and on the resource type configuration, makes a determination on whether to initiate performing or skip the semi-statically configured uplink transmission on the first time resource, wherein the circuitry determines to skip the semi-statically configured uplink transmission on the first time resource if the first time resource overlaps with the second time resource and if the semi-statically configured uplink transmission is not applicable to the resource type of the second time resource, and the transceiver, in operation, performs or skips the semi-statically configured uplink transmission on the first time resource in accordance with a result of the determination.

According to a second aspect, which may be provided in combination with the first aspect, the transceiver, in operation, receives a first transmission configuration defining the first time resource allocated for a first semi-statically configured uplink transmission applicable to a first resource type as the associated resource type, and a second transmission configuration defining a third time resource allocated for a second semi-statically configured uplink transmission applicable to a second resource type as the associated resource type, and wherein the first semi-statically configured uplink transmission is not applicable to the second resource type.

According to a third aspect, which may be provided in combination with the first or second aspect, the transmission configuration includes a resource type indicator indicating the associated resource type.

According to a fourth aspect, which may be provided in combination with any one of the first to third aspects, the resource type to which the semi-statically configured uplink transmission is applicable is one of a resource type allowing subband duplex and a resource type prohibiting subband duplex.

According to a fifth aspect, which may be provided in combination with any one of the first to third aspects, the resource type configuration includes a first slot format and a second slot format, each of the first slot format and the second slot format specifies the second time resource as uplink, downlink, or flexible, and the resource type to which the semi-statically configured uplink transmission is applicable is one of: i) a conflicting resource type where the first slot format indicates the second time resource as a downlink resource and the second slot format indicates the second time resource as an uplink resource or a flexible resource and ii) a non-conflicting resource type where the first slot format indicates the second time resource as a flexible resource or where respective indications of the second time resource in the first slot format and in the second slot format are the same.

According to a sixth aspect, which may be provided In combination with any one of the first to third aspects, the resource type to which the semi-statically configured uplink transmission is applicable is one of a resource type having a zero timing advance offset and a resource type having a non-zero timing advance offset.

According to a seventh aspect, which may be provided in combination with the first aspect, the resource type configuration includes a semi-statically configured slot format, the transceiver, in operation, receives a dynamically configured slot format, each of the semi-statically configured slot format and the dynamically configured slot format indicates the resource type of the second time resource as uplink, downlink, or flexible, and the semi-statically configured uplink transmission is not applicable to the resource type of the second time resource if the semi-statically configured slot format indicates the second time resource as a flexible resource and the dynamically configured slot format indicates the second time resource as an uplink or downlink resource.

According to an eighth aspect, which may be provided in combination with the seventh aspect, the semi-statically configured uplink transmission is applicable to the resource type of the second time resource if both the semi-statically configured slot format and the dynamically configured slot format indicate the second time resource as a flexible resource.

According to a ninth aspect, which may be provided in combination with the seventh or eighth aspect, a first transmission configuration defining the first time resource allocated for a first semi-statically configured uplink transmission, a second transmission configuration defining a third time resource allocated for a second semi-statically configured uplink transmission applicable to a second resource type as the associated resource type, and the second semi-statically configured uplink transmission is applicable to the resource type of the second time resource if the third time resource overlaps with the second time resource, the semi-statically configured slot format indicates the second time resource as a flexible resource, and the dynamically configured slot format indicates the second time resource as an uplink resource.

According to a tenth aspect, which may be provided in combination with the first aspect or the second aspect, the semi-statically configured uplink transmission is applicable to the second time resource: if the resource type configuration includes a semi-statically configured slot format defining the resource type of the second time resource as flexible, and if the transceiver, in operation, receives a configuration to ignore a dynamically indicated slot format for the second time resource or a parameter indicating configuration of a dynamically indicated slot format for the second time resource is not configured to the UE.

According to an eleventh aspect, which may be provided in combination with the first aspect or the second aspect, the transceiver, in operation, receives applicability information indicating whether the semi-statically configured uplink transmission is applicable to the resource type of the second time resource.

According to a twelfth aspect, which may be provided in combination with any one of the first to eleventh aspects, the circuitry determines to initiate performing the semi-statically configured uplink transmission on the first time resource if the first time resource overlaps with the second time resource and if the semi-statically configured uplink transmission is applicable to the resource type of the second time resource.

According to a thirteenth aspect, a base station is provided comprising circuitry which, in operation, generates a transmission configuration defining a first time resource allocated for a semi-statically configured uplink transmission applicable to an associated resource type, and a resource type configuration defining a resource type of a second time resource, and a transceiver, which, in operation, transmits the transmission configuration and the resource type configuration. The circuitry in operation, based on the transmission configuration and on the resource type configuration, makes a determination on whether to initiate or skip receiving the semi-statically configured uplink transmission on the first time resource, the reception of of the semi-statically configured uplink transmission on the first time resource is determined to be skipped if the first time resource overlaps with the second time resource and if the semi-statically configured uplink transmission is not applicable to the resource type of the second time resource, and the transceiver, in operation, performs or skips reception of the semi-statically configured uplink transmission on the first time resource in accordance with a result of the determination.

According to a fourteenth aspect, which may be provided in combination with the thirteenth aspect, the circuitry, in operation, determines that the communication device is to skip the semi-statically configured uplink transmission on the first time resource when allocating the first time resource for subband duplex operation.

According to a fifteenth aspect, provided is a communication method comprising the following steps to be performed by a communication device: receiving a transmission configuration defining a first time resource allocated for a semi-statically configured uplink transmission applicable to an associated resource type, receiving a resource type configuration defining a resource type of a second time resource, based on the transmission configuration and on the resource type configuration, making a determination on whether to initiate performing or skip the semi-statically configured uplink transmission on the first time resource, wherein the semi-statically configured uplink transmission is determined to be skipped on the first time resource if the first time resource overlaps with the second time resource and if the semi-statically configured uplink transmission is not applicable to the resource type of the second time resource, and performing or skipping the semi-statically configured uplink transmission in accordance with a result of the determination.

According to a sixteenth aspect, provided is a communication method for a base station, comprising the following steps to be performed by a base station: generating a transmission configuration defining a first time resource allocated for a semi-statically configured uplink transmission applicable to an associated resource type, transmitting the transmission configuration, generating a resource type configuration defining a resource type of a second time resource, transmitting the resource type configuration, based on the transmission configuration and on the resource type configuration, making a determination on whether to initiate or skip receiving the semi-statically configured uplink transmission on the first time resource, wherein the reception of the semi-statically configured uplink transmission on the first time resource is determined to be skipped if the first time resource overlaps with the second time resource and if the semi-statically configured uplink transmission is not applicable to the resource type of the second time resource, transmitting the resource type configuration, and performing or skipping reception of the semi-statically configured uplink transmission on the first time resource in accordance with a result of the determination.

Further provided are an integrated circuit configured for controlling a communication device, to carry out the method according to the fifteenth aspect, and an integrated circuit for controlling a base station to carry out the communication method according to the sixteenth aspect.

In addition, a non-transitory medium is provided storing program instructions which, when executed on a processing circuitry such as a general purpose processor, cause the processing circuitry to perform all steps of the above mentioned method embodiments or aspects.

## Claims

1. A communication device comprising:
a transceiver, which, in operation, receives a transmission configuration defining a first time resource allocated for a semi-statically configured uplink transmission applicable to an associated resource type, and a resource type configuration defining a resource type of a second time resource; and
circuitry, which, in operation, based on the transmission configuration and on the resource type configuration, makes a determination on whether to initiate performing or skip the semi-statically configured uplink transmission on the first time resource,
wherein the circuitry determines to skip the semi-statically configured uplink transmission on the first time resource if the first time resource overlaps with the second time resource and if the semi-statically configured uplink transmission is not applicable to the resource type of the second time resource, and
the transceiver, in operation, performs or skips the semi-statically configured uplink transmission on the first time resource in accordance with a result of the determination.

2. The communication device according to claim 1, wherein the transceiver, in operation, receives
a first transmission configuration defining the first time resource allocated for a first semi-statically configured uplink transmission applicable to a first resource type as the associated resource type, and
a second transmission configuration defining a third time resource allocated for a second semi-statically configured uplink transmission applicable to a second resource type as the associated resource type, and wherein the first semi-statically configured uplink transmission is not applicable to the second resource type.

3. The communication device according to claim 1 or 2, wherein the transmission configuration includes a resource type indicator indicating the associated resource type.

4. The communication device according to any one of claims 1 to 3, wherein the resource type to which the semi-statically configured uplink transmission is applicable is one of a resource type allowing subband duplex and a resource type prohibiting subband duplex.

5. The communication device according to any one of claims 1 to 3, wherein the resource type configuration includes a first slot format and a second slot format, each of the first slot format and the second slot format specifies the second time resource as uplink, downlink, or flexible, and the resource type to which the semi-statically configured uplink transmission is applicable is one of:
i) a conflicting resource type where the first slot format indicates the second time resource as a downlink resource and the second slot format indicates the second time resource as an uplink resource or a flexible resource and
ii) a non-conflicting resource type where the first slot format indicates the second time resource as a flexible resource or where respective indications of the second time resource in the first slot format and in the second slot format are the same.

6. The communication device according to any one of claims 1 to 3, wherein the resource type to which the semi-statically configured uplink transmission is applicable is one of a resource type having a zero timing advance offset and a resource type having a non-zero timing advance offset.

7. The communication device according to claim 1, wherein
the resource type configuration includes a semi-statically configured slot format,
the transceiver, in operation, receives a dynamically configured slot format,
each of the semi-statically configured slot format and the dynamically configured slot format indicates the resource type of the second time resource as uplink, downlink, or flexible, and
the semi-statically configured uplink transmission is not applicable to the resource type of the second time resource if the semi-statically configured slot format indicates the second time resource as a flexible resource and the dynamically configured slot format indicates the second time resource as an uplink or downlink resource.

8. The communication device according to claim 7 wherein the semi-statically configured uplink transmission is applicable to the resource type of the second time resource if both the semi-statically configured slot format and the dynamically configured slot format indicate the second time resource as a flexible resource.

9. The communication device according to claim 7 or 8, wherein
a first transmission configuration defining the first time resource allocated for a first semi-statically configured uplink transmission,
a second transmission configuration defining a third time resource allocated for a second semi-statically configured uplink transmission applicable to a second resource type as the associated resource type, and
the second semi-statically configured uplink transmission is applicable to the resource type of the second time resource if the third time resource overlaps with the second time resource, the semi-statically configured slot format indicates the second time resource as a flexible resource, and the dynamically configured slot format indicates the second time resource as an uplink resource.

10. The communication device according to claim 1 or 2, wherein the semi-statically configured uplink transmission is applicable to the second time resource:
if the resource type configuration includes a semi-statically configured slot format defining the resource type of the second time resource as flexible, and
if the transceiver, in operation, receives a configuration to ignore a dynamically indicated slot format for the second time resource or a parameter indicating configuration of a dynamically indicated slot format for the second time resource is not configured to the UE.

11. The communication device according to claim 1 or 2, wherein the transceiver, in operation, receives applicability information indicating whether the semi-statically configured uplink transmission is applicable to the resource type of the second time resource.

12. The communication device according to any one of claims 1 to 11, wherein the circuitry determines to initiate performing the semi-statically configured uplink transmission on the first time resource if the first time resource overlaps with the second time resource and if the semi-statically configured uplink transmission is applicable to the resource type of the second time resource.

13. A base station comprising:
circuitry which, in operation, generates a transmission configuration defining a first time resource allocated for a semi-statically configured uplink transmission applicable to an associated resource type, and a resource type configuration defining a resource type of a second time resource, and
a transceiver, which, in operation, transmits the transmission configuration and the resource type configuration,
wherein the circuitry in operation, based on the transmission configuration and on the resource type configuration, makes a determination on whether to initiate or skip receiving the semi-statically configured uplink transmission on the first time resource,
wherein the reception of of the semi-statically configured uplink transmission on the first time resource is determined to be skipped if the first time resource overlaps with the second time resource and if the semi-statically configured uplink transmission is not applicable to the resource type of the second time resource, and
the transceiver, in operation, performs or skips reception of the semi-statically configured uplink transmission on the first time resource in accordance with a result of the determination.

14. The base station according to claim 13, wherein the circuitry, in operation, determines that the communication device is to skip the semi-statically configured uplink transmission on the first time resource when allocating the first time resource for subband duplex operation.

15. A communication method comprising the following steps to be performed by a communication device:
receiving a transmission configuration defining a first time resource allocated for a semi-statically configured uplink transmission applicable to an associated resource type;
receiving a resource type configuration defining a resource type of a second time resource;
based on the transmission configuration and on the resource type configuration, making a determination on whether to initiate performing or skip the semi-statically configured uplink transmission on the first time resource,
wherein the semi-statically configured uplink transmission is determined to be skipped on the first time resource if the first time resource overlaps with the second time resource and if the semi-statically configured uplink transmission is not applicable to the resource type of the second time resource; and
performing or skipping the semi-statically configured uplink transmission in accordance with a result of the determination.

16. A communication method comprising the following steps to be performed by a base station:
generating a transmission configuration defining a first time resource allocated for a semi-statically configured uplink transmission applicable to an associated resource type;
transmitting the transmission configuration;
generating a resource type configuration defining a resource type of a second time resource;
transmitting the resource type configuration;
based on the transmission configuration and on the resource type configuration, making a determination on whether to initiate or skip receiving the semi-statically configured uplink transmission on the first time resource;
wherein the reception of the semi-statically configured uplink transmission on the first time resource is determined to be skipped if the first time resource overlaps with the second time resource and if the semi-statically configured uplink transmission is not applicable to the resource type of the second time resource;
transmitting the resource type configuration; and
performing or skipping reception of the semi-statically configured uplink transmission on the first time resource in accordance with a result of the determination.
